# EUROPEAN PATENT SPECIFICATION

(11) **EP 4 301 992 B1**
(45) Date of publication and mention of the grant of the patent: **31.12.2025**
(21) Application number: 22711010.3
(22) Date of filing: 04.03.2022
(51) Int. Cl.: F16B 13/14, F16B 11/00

(54) **ANCHORING A DOWEL IN AN OBJECT**
VERANKERUNG EINES DÜBELS IN EINEM GEGENSTAND
ANCRAGE D'UNE CHEVILLE DANS UN OBJET

(30) Priority: 05.03.2021 CH 2382021
(43) Date of publication of application: 10.01.2024
(73) Proprietor: Woodwelding AG, 6362 Stansstad (CH)
(72) Inventor: LEHMANN, Mario, 2353 Les Pommerats (CH); MAYER, Jörg, 5702 Niederlenz (CH)
(74) Representative: Frei Patent Attorneys
(86) International application number: PCT/EP2022/055618
(87) International publication number: WO 2022/184916

(56) References cited:
- WO-A2-03/046390
- ES-T3- 2 439 704
- ES-T3- 2 453 116
- US-A- 4 103 771
- US-A1- 2019 358 908
- US-B2- 8 539 992

## Description

### FIELD OF THE INVENTION

The invention is in the field of mechanical engineering and construction and concerns methods for anchoring a first object in a second object, for example being of a dense material or comprising hollow spaces.

### BACKGROUND OF THE INVENTION

Anchoring in objects that have a low density and/or low mechanical strength may be a challenge. Such objects for example include objects with macroscopic hollow spaces, for example bricks with hollow spaces (so-called "hollow bricks"). For these, there exist special dowels that provide some anchoring strength for a further object (such as a screw) despite the special properties of the objects with the hollow spaces. Such special dowels are pushed into pre-drilled holes in the objects and have the property of spreading when thereafter a screw is inserted, so as to anchor the screw by the conventional dowel principle. A disadvantage is that the anchoring strength is limited. Especially, given the limited axial extension (extension with respect to an axis of the pre-drilled holes) hollow spaces often have, the extent by which the dowel may expand into the hollow spaces depends on the material strength, with only little expansion being possible if the dowel material is comparably strong. This limits the anchoring strength.

A further category of objects in which anchoring is a challenge is constituted by objects of dense materials that are not meltable and have a low ductility so that fastening methods like welding or anchoring a screw are not applicable. Such objects for example include objects of concrete, brick, hardened plaster, ceramics, stone, glass etc. For fastening a first object to a second object of such material, according to the prior art often curable resins were used. While such curable resins have the potential of yielding a very strong connection, they firstly have the disadvantage that curing often takes a lot of time until the connection may be loaded. This makes processes more complicated and more expensive. A second disadvantage is that the presence of drill dust or other debris at the interface may cause the connection to become unreliable and to fail. In order to deal with this, further steps, such as cleaning steps after drilling, may be necessary, which adds additional complication.

WO 03/046390 discloses a method of fastening an insert (compared to the "first object" of claim 1 in the written opinion (WO)) to a building element (compared to the "second object" in the WO). The building element comprises an opening, in which a portion of the insert is inserted.

### SUMMARY OF THE INVENTION

The object of the present invention is to provide a method for anchoring a first object in a second object, which method works for a large variety of second objects, including objects of dense material having a low ductility, objects of low mechanical strength and/or objects of low density. It is a further object to provide a method of anchoring a first object in a second object which overcomes disadvantages of prior art anchoring methods and which especially is more efficient at least in some situations.

According to an aspect of the invention, a method of anchoring a first object in a second object is provided. To this end, initially, the second object is provided, wherein the second object comprises an opening. Such opening may for example by provided by drilling into the second object. The opening can optionally be symmetrical about an opening axis. The first object has an insert portion that defines an insertion axis. The method comprises inserting the insert portion in the opening, with a hardenable composition (for example liquid or pasty resin, pre-polymerized solid resin, mortar) between a wall of the opening and the insert portion, and causing mechanical vibration energy to impinge to cause the hardenable composition to undergo a chemical hardening process to yield a hardened composition, so that a first connection between the first object and the hardened composition and a second connection between the hardened composition and the second object results, whereby the first object is anchored in the second object.

The steps of inserting the insert portion into the opening and of causing mechanical vibration energy to impinge may in a group of embodiments be carried out at least partially simultaneously, i.e. the vibration may impinge while the insert portion is advanced into the opening (this does not exclude that the vibration energy continues to impinge after the advance movement has been completed, with the insert portion being held stationary). This has a plurality of advantages.

Firstly, the coupling of energy into the hardenable composition is more efficient. Due to the relative movement of the first object, the hardenable composition is displaced by the first object being inserted, especially if it is liquid or pasty, it and its surface structure and circulation caused by the movement of the first object assist in coupling energy into the hardenable composition. If the hardenable composition is solid, then friction between the first object and the hardenable composition assists in coupling energy into the hardenable composition.

Secondly, depending on the consistency of the hardenable component, insertion of the first object may be difficult or almost impossible without the effect of the vibration that has an initial effect of lowering the viscosity.

Thirdly, in the configurations in which the hardenable composition in addition to being hardened has to be driven outward into structures of the second object, the fact that the vibrations assist this driving-outward already during introduction may be helpful or even important: Without the vibration impinging the hardenable composition may, if sufficiently flowable, have the tendency to just flow back out of the opening when the first object displaces it during insertion, and additional measures have to be taken and substantial pressure may have to be applied to control the flow.

Further, the relative movement of the first object relative to the hardenable composition and/or the second object is helpful for there being circulation of hardenable composition material that helps to integrate drill dust or other debris material present in the opening. In this way, such drill dust or other material will not only be removed from the interface but in addition integrated into the hardenable composition to serve as a filler.

Even more, if the hardenable composition is dimensionally stable, the relative movement may also assist there being energy absorption at the interface between the hardenable component and the second object to cause local liquefaction of the hardenable component at this interface and interpenetration of structures of the second object or other bonding of the hardenable composition to the second object thereby.

In a group of alternative embodiments, the steps of inserting the insert portion into the opening and of causing the mechanical vibration energy to impinge may be carried out sequentially, i.e., the vibration energy impinges only after the insert portion has been inserted. This group of alternative embodiments features the advantage that the application of the ultrasound is much easier to control. Especially, this group of alternative embodiments is well suited for manual insertion of the insert portion independent of the viscosity of the hardenable composition.

Especially (but not only) in this group of alternative embodiments, also the inserting step may be carried out sequentially in that first the hardenable composition is dispensed into the opening and then the insert portion is inserted. If this is the case, it may be advantageous if the viscosity of the hardenable composition is relatively low, whereby the insert portion is subject to only a small mechanical resistance when being inserted.

In embodiments that feature dispensing the hardenable composition first and inserting the insert portion only after the dispensing (without or with mechanical vibration energy being coupled into the first object during inserting), the method may comprise mechanically coupling the first object to a sonotrode. Such sonotrode vibrates during the step of causing the mechanical vibration energy to impinge on the first object and thereby couples the vibration energy into the first object. Mounting the first object to the sonotrode is in contrast to a set-up in which the vibrating sonotrode merely hammers onto the first object for coupling the energy into it. By such a mechanical coupling between the sonotrode and the first object, the full amplitude is transmitted into the first object. Also, coupling of the vibration energy into the first object thereby is not influenced, or influenced only to a lesser extent by how strong any pressing force from the sonotrode onto the first object is. Thus, due to this mechanical coupling, the transmission of vibration energy into the first object does not depend on any mechanical resistance onto the first object.

Also in embodiments of the group of alternative embodiments, which feature carrying out the inserting first and only thereafter causing the mechanical energy to impinge, the first object may be coupled to the sonotrode already during insertion, before the sonotrode is set into vibrational motion.

Especially, but not only, in embodiments of the group of alternative embodiments, which feature carrying out the inserting first and only thereafter causing the mechanical energy to impinge, a resilient element may be placed between a distal end of the insert portion and a bottom of the opening. Such resilient element may be such as to cause only a minimal damping in an amplitude range of up to about 200 µm (peak-to-peak). It may for example comprise one or more of: a mechanical spring (metallic, of a plastics); an elastomeric disc; a disc of a paper-like material such as paper or cardboard; see for example WO 2019/068901 for a definition of suitable materials). This measure serves to prevent the capability of the first object to vibrate from being impeded by physical contact between the first object and the - often hard - bottom of the opening. The resilient element may be placed before or after dispensing the hardenable composition. In embodiments, it may be pre-mounted to the distal end of the insert portion during the first object's insertion.

Due to the elastic element, the first object can vibrate essentially freely when the vibration energy is coupled into it, even if it is held against the bottom of the opening. This is advantageous in that the process is much easier to control compared to set-ups in which the first object cannot be held against the bottom of the opening. For example, due to this solution, activation by a hand-held tool is possible. Also automated solutions are easier to implement in that no device for controlling the position needs to be present; rather, it may be sufficient to just apply a pre-determined force to make sure that the first object ends in the desired position, introduced into the full depth of the opening.

Alternatively the sonotrode, or other part of the device, may comprise means that delimit the insertion of the first object in the hole so that it does not reach the bottom.

In embodiments, the hardenable composition, in addition to having a hardenable (for example cross-linkable) matrix, may have a filler that serves to increase the heat conduction and/or to increase absorption of vibration energy.

The filler may especially comprise a material that has a higher heat conductivity than the material composition that constitutes the matrix, for example higher by at least a factor 3.

Increasing the heat conduction is beneficial in view of the fact that absorption of mechanical vibration energy may take place rather locally, especially in places where there is physical contact between the first object and the hardenable composition and near vibration antinodes. The heat conduction increasing fillers assist the heat transport to portions of the hardenable composition that are not at these places and ensure a more homogeneous hardening during the vibration energy input and immediately thereafter. Suitable fillers comprise:
- Silicon Carbide
- Aluminum Nitride
- Silicon Nitride
- Boron Nitride
- Other thermally conductive ceramics, such as Beryllium oxide, etc; generally ceramics with a thermal conductivity of more than 30 W/mK, or more than 50 W/mK or more than 90 W/mK are available on the market (for example from Precision Ceramics USA)

High thermal conductivity ceramics as fillers feature the advantage that in addition to having the high thermal conductivity, they are also corrosion resistant, and many of them are cost efficient, too.

In addition to material properties and concentration, also the shape (granular, spheric for optimal flowing behavior; fibrous, plate-like (for example as nanoplatelets) may have an influence on the thermal conductivity of the hardenable composition, for example by leading to a suitable percolation behavior.

A filler that serves to increase the absorption energy may have the effect of ensuring a sufficient heating already at comparably low amplitudes. Such a filler may for example comprise thermoplastic particles with a high internal damping, for example of a material that has a glass transition temperature below room temperature or only slightly there above (for example below 50°C or below 40°C).

In addition or as an even further alternative, the hardenable composition may comprise an activator that is activated at a comparably low temperature so that a moderate heating is sufficient for initiating the hardening. While such compositions are more difficult to store, they may nevertheless constitute an option for certain special applications.

The first connection and/or the second connection may comprise an adhesive connection, which may include chemical bonds between the hardenable composition and the first/second object. For this, the effect of the mechanical vibrations causing an efficient wetting of the surface of the first/second object by hardenable composition material provides a strong benefit, in addition to the benefit coming from a substantial acceleration of the hardening process caused by the energy absorption.

In embodiments, the insert portion of the first object has an outer shape forming an undercut with respect to axial directions, whereby the first connection between the first object and the hardened composition comprises a positive-fit connection, in addition or an alternative to comprising an adhesive connection.

In embodiments, the mechanical vibration energy also causes the hardenable composition to interpenetrate structures of the second object (especially structures adjacent the wall of the opening), whereby the second connection comprises a (second) positive-fit connection between the hardened composition and the second object, in addition or as an alternative to comprising an adhesive connection.

A chemical hardening process is a process in which the chemical composition undergoes a substantial change, as opposed to mere physical process such as a freezing process (a freezing process being a process of solidification by mere change of the aggregate state). Usually, a chemical hardening process will be irreversible, i.e. it cannot be reversed by for example re-heating. Examples of chemical hardening processes used herein are curing processes in which molecules are for example caused to form a cross-linked network of polymer chains, chain polymerization processes, or hydration reactions.

In a group of embodiments, the hardenable composition, therefore, is a prepolymer. Then, the chemical hardening process may comprise a cross-linking process yielding a cured polymer. Also, other polymeric reactions, such as a chain polymerization process are possible.

In another group of embodiments, the hardenable composition is a mortar, and the chemical hardening process is for example a hydraulic curing (involving a hydration reaction).

In embodiments, as mentioned the mechanical vibration energy may also cause the hardenable composition to interpenetrate structures of the second object to cause, after solidification, a (second) positive-fit connection between the hardened composition and the second object. Then, the anchoring of the first object in the second object has properties of the so-called 'Woodwelding' anchoring, as has already been proposed in various publications, including WO 98/42988, for anchoring a joining element of a thermoplastic material in an object. The 'Woodwelding' process comprises pressing the joining element against the object while mechanical vibrations are coupled into the object until thermoplastic material of the joining element becomes flowable and flows into structures of the object to yield, after re-solidification, a positive-fit connection between the joining element and the object. This approach leads to a solid and efficient anchoring especially in objects having a comparably high mechanical strength while nevertheless being porous or being capable of developing pores under the effect of hydrostatic pressure - for example wood or wood composites. However, there are limits to the method if the material of the object is too dense to be interpenetrated or comparably weak or brittle and/or if the material of the joining element is too soft for mechanical vibration to be transmitted through it without too high internal losses. The present invention deals with these limits: Firstly, a hardenable composition for example being a polymerizable material or mortar can be provided as a relatively soft material that has a high internal friction when subject to mechanical movement or even as an essentially liquid material. Therefore, when mechanical energy impinges, the hardenable composition may, due to internal friction and/or micro-circulation caused by the vibration, efficiently absorb energy and become heated independent of whether or not the circumstances allow for high external friction. Secondly, it is possible that the set-up is kept stable independent of the mechanical strength of the hardenable composition during the process so that the prepolymer/mortar may become entirely flowable if desired (this being in contrast to the 'Woodwelding' process where the joining element, with the exception of specific flowable regions, needs to maintain mechanical stability during the process). Thirdly, after hardening, the resulting hardened composition, especially polymer or hardened mortar material, may have a high mechanical stability in a state in which in embodiments it may interpenetrate both, structures of the first object and structures of the second object. Thus, the beneficial anchoring obtained in the Woodwelding process for mechanically stable second objects is obtained in accordance with embodiments of the present invention also in second objects of weaker/less dense material or material that may not be sufficiently interpenetrated by the hardenable composition. Also in the here-discussed embodiments that comprise interpenetration of material of the second object and/or structures of the first object by the hardenable composition to yield a positive-fit connection, the effect of the hardenable composition chemically bonding to the second object and/or the first object may be present, in addition to the positive-fit connection.

In embodiments, the hardenable composition has the property of reducing its viscosity upon activation by mechanical vibration. This may be due to being heated (i.e. a temperature dependent viscosity) or by the mechanical activation itself (thixotropy), or both. Thereby, the vibration energy input does not only activate the composition to harden, but initially also acts to ease introduction of the first object and, as the case may be, to cause the hardenable composition to interpenetrate structures of the second object and possibly of the first object.

In a group of embodiments, the second object has hollow spaces, wherein at least one of the hollow spaces opens into the opening and thereby forming radial outward extensions of the opening. Such hollow spaces are different from a mere (microscopic) porosity, which may be present in addition to the hollow spaces. Rather, they are macroscopic and have defined positions and shapes, in contrast to a mere porosity. The dimensions of the hollow spaces - and of the outward protrusions, are for example larger than 1 mm or larger than 2 mm in any direction/dimension. At least some of the hollow spaces thus may have a volume of at least of at least 10 mm³ or at least 100 mm³. The hollow spaces may be closed cavities or open cavities, formed for example by tube-shaped through openings in the second object, as is known for some bricks available on the market. The hollow spaces may for example form a regular pattern.

The first object may be of any material that does not become flowable under the conditions present during the process. For example, the first object may be metallic, such as of stainless steel, aluminum, wood or any other suitable material. It may optionally be equipped to be a sonotrode, i.e. to be directly coupled to a vibration generating apparatus.

The first object may have, on its insert portion, outer structures that form the mentioned optional undercut. In an example, such outer structures are formed by a thread, whereby the insert portion may for example belong to a threaded bar. Alternatively, the outer structures are formed by ribs that may run in tangential direction and/or in axial direction, or knurling patterns.

Outer structures of this kind may include micro-structures (yielding a micro-positive-fit), in the form of a surface having a roughness of greater than Rₐ= 10 µm, greater than Rₐ= 20 µm, greater than Rₐ= 50 µm or even greater than Rₐ= 100 µm) and/or macroscopic structures with protrusions/indentations of radial extensions of at least 0.2 mm or at least 0.5 mm or at least 1 mm or even 2 mm or more. Macroscopic structures cause a macroscopic positive-fit connection. In addition to yielding the positive-fit connection, such microstructures and especially macroscopic structures have the effect of causing local micro-flows, thereby coupling energy into the hardenable composition.

Generally, the hardenable composition may be in a liquid, pasty or solid state prior to the input of mechanical vibration energy.

If it is in a liquid (viscous) state (viscosity for example below 10⁶ Pa s or 10⁵ Pa s, below 10⁴ Pa s or below 10³ Pa s), then an additional stabilizing element, such as a meshed sleeve may have to be used.

When being in a pasty state (viscosity above 10⁴ Pa s or 10⁵ Pa s or 10⁶ Pa s or below 10³ Pa s), also an additional stabilizing element may be used, and/or its properties can be adapted to the shapes and dimensions of the opening and the insert portion in a manner that the insert portion is capable of displacing the hardenable composition but with a flow resistance sufficiently high so that the hardenable composition does not just flow away in an uncontrolled manner into structures of the second objects and/or out of the opening.

Both, when in a liquid state or when being in pasty state, the hardenable composition may be dispensed from a hardenable composition container, i.e. from a receptacle that contains more material than required for the individual opening. The method may then thus comprise dispensing the hardenable composition into the opening and/or onto the insert portion.

If the hardenable composition is in a solid state, it may be provided as an element having a defined shape (for example sleeve-shaped) and being dimensionally stable. To this end, it may be in a state in which it has a Young's modulus that is defied and that is for example at least 10 MPa, in some embodiments at least 100 Mpa. The dimension of such hardenable composition element may for example be such that the opening is slightly undersized, whereby the hardenable composition element is held in the opening by an interference fit and tends to expand into structures of the hole when relaxed by the impact of the mechanical vibration energy.

If the hardenable composition is in a solid state, it may expecially be provided as a sheath-like (or tube-like) element with or without a closed bottom. An inner diameter of the sheath-like or tube-like element may be dimensioned to be smaller than an outer diameter of the insert portion, whereby upon insertion of the insert portion, material of the hardenable composition element is displaced, especially outwardly and possibly into structures of the second object, so that the mentioned anchoring in the second object may benefit.

For the hardenable composition to be in a pasty or solid state, it may comprise a resin that is pre-polymerized to a desired extent, but not fully cured, i.e. it may be a prepolymer. In addition or as an alternative, it may comprise a filler that enhances its viscosity/modulus. In the latter case, the resin may still be a monomer, the hardenable composition nevertheless optionally being pasty or even solid.

If the hardenable composition is a composition capable of being polymerized, as a material for the hardenable composition, any suitable composition that can be activated to form a polymer, especially a cross-linked polymer, is suitable. Often, such materials, for example prepolymers, exhibit thermoplastic properties, i.e., their viscosity can be lowered by heating. Thereby, the absorption of heat upon mechanical activation has as several functions. Firstly, it brings the hardenable composition into a more flowable state in which it flows better and therefore is in a condition such as to interpenetrate structures of the second object and if necessary also of the first object (this necessity arises if the hardenable composition is not already pre-assembled with the first object). Secondly, the heat absorption on a bit larger timescale ensures activation for the hardenable composition to harden, i.e., depending on its state, to form polymer chains, to modify/lengthen the polymer chains and/or to cross-link so that it becomes hard and mechanically stable. Further, it improves wetting of the surfaces, optionally both, of the second object and of the first object. A further possible effect of the mechanical activation is that it assists the driving of the hardenable composition into the structures of the second object. This may be potentially beneficial both, for better anchoring (positive-fit connection) and for repairing defects, especially in the second object. An even further possible effect is that drilling dust or other material present is being flown around and embedded in the hardenable composition material instead of impeding a reliable connection.

The hardenable composition may comprise a plurality of components for example mixed together immediately prior to the step of inserting the hardenable composition.

Examples of suitable compositions include oligomers, especially oligomers having thermoplastic or thixotropic properties, i.e. having the property of reducing the viscosity upon activation by mechanical vibration. For specific example of a prepolymer is a composition of components that mixed together harden to become a polyurethane or an epoxy.

In addition to a polymerizable component (monomer, prepolymer), the hardenable composition may optionally comprise a filler. Suitable fillers include the mentioned materials enhancing the thermal conductivity. More in general, they include ceramics, mineral fillers, fibers, thermoplastic bodies, etc. Their content may be chosen such that the desired mechanical properties, especially thermal conductivity and/or viscosity, are achieved.

The fillers, in addition or as an alternative to allowing an engineering of the thermal conductivity and/or viscosity, may optionally have one or more of the following additional functions:
∘ Minimizing of the shrinking effect upon polymerization;
∘ Reduction of cost;
∘ Enhancing the mechanical stability, especially if the filler is fibrous;
∘ Enhancing the toughness and/or ductility, especially if the filler is thermoplastic. A thermoplastic filler may moreover potentially make a thermoplastic welding connection possible.
∘ Also, thermoplastic fillers have the potential of stabilizing the resin temperature during the process. If they are subject to a first-order phase transition, the phase transition temperature being chosen so that it corresponds to the desired temperature of the hardenable composition during the process, then a heating of the hardenable composition due to the mechanical vibration energy input will be stabilized around this temperature because of energy absorption by the thermoplastic filler.
∘ Chemical functional fillers such as starters/initiators may be provided in a form that they are set free only upon activation by the mechanical vibration. For example, they may be provided in the form of vesicles with membranes encapsulating the fillers, which membranes are ruptured or molten as an effect of the mechanical vibration energy input, so as to set free the fillers.

As a mortar, the hardenable composition may comprise a hydraulic cement, and additionally water and possibly a filler. Also, for mortars, the above-mentioned effects of mechanical activation by vibration (initially bringing into a more flowable state, activation of the hardening process, wetting, driving into structures, integrating of drill dust or similar) may be present, as cements may exhibit thermoplastic and/or thixotropic properties. A further possible effect of the mechanical vibration energy that is especially manifest for mortars is that they assist local densification.

It is also possible that the hardenable composition in addition to a cement and fillers comprises a polymeric filler or prepolymer filler, whereby the composition is a kind of mortar/polymer composite. This possibly increases the toughness of the connection.

For both, prepolymers and mortars, the hardened composition after the process may comprise one or more ingredients that were not present initially in the hardenable composition but that were absorbed during the process. Especially, if there is drilling dust or other debris in the opening, this may effectively be absorbed and even contribute to the stability of the composition by serving as a filler - as opposed to prior art approaches where dust compromises the bond quality, for example by preventing adhesive connections from working etc.

Applying the hardenable composition may comprise pre-assembling (during manufacturing) it with the first object or the second object or both, or providing it as an initially separate, dimensionally stable item that may be mounted to the first object or inserted into the opening (on site).

For example, the hardenable composition when in a pasty state may be filled into the opening, for example manually, by using a glue gun or the like, or in an automated process. Alternatively, it may form a sleeve or plug that is insertable into the opening. Such sleeve-like or plug-like item of the hardenable composition may also be mounted to the first object, for example by having an inner thread and being capable of being screwed onto the insert portion. As an even further alternative, the hardenable composition may be present as a - comparably thick - coating of the insert portion and/or as a coating of an opening wall of the opening.

In this, a "flowable state" implies that the material is at least sufficiently pliable for a permanent (and not only elastic) deformation to occur.

The mechanical vibration energy may comprise longitudinal vibration, especially ultrasonic vibration.

Mechanical vibration or oscillation suitable for the method according to the invention has preferably a frequency between 2 and 200 kHz (even more preferably between 10 and 100 kHz, or between 20 and 40 kHz) and a vibration energy of 0.2 to 20 W per square millimeter of active surface. The vibrating tool (e.g. sonotrode) is e.g. designed such that its contact face oscillates predominantly in the direction of the tool axis (longitudinal vibration) and with an amplitude of between 1 and 100µm, preferably around 30 to 60µm. Such preferred vibrations are e.g. produced by ultrasonic devices as e.g. known from ultrasonic welding. In addition or as an alternative to oscillating predominantly in the longitudinal direction, the vibrating tool may be designed to be subject to rotational oscillation or also transversal oscillation.

In this text, the terms "radial" and "axial" are to be understand as relating to the proximodistal axis which may, during the process, coincide with the respective axis of the opening.

The present invention comprises the step of causing mechanical vibration energy to impinge for causing the hardenable composition to harden. This entails the advantages described in this text, namely that in addition to a rapid hardening (compared to an approach of just waiting until the composition has hardened), the wetting, the possible temporary reduction of viscosity (and possible interpenetration of structures), the improved wetting, and the possible integration of drill dust or other debris into the composite. Especially if these additional advantages are not important, then concepts of embodiments of the present invention may, however, also be useful, in not claimed embodiments, if curing is caused by other energy input than mechanical vibration, for example irradiation (by laser radiation, UV radiation etc.), by induction, by other forms of heat input (for example by a flow of hot air or by a heated probe etc.) etc.

A method anchoring a first object in a second object comprises the steps of:
- providing the second object, wherein the second object comprises an opening;
- Providing the first object having an insert portion that defines an insertion axis;
- Inserting a hardenable composition and the insert portion in the opening;
- causing energy to impinge on the hardenable composition (directly or via the first object, the energy for example comprising vibration energy, electromagnetic radiation, induction, heat input etc.) to cause it to undergo a chemical hardening process while it is between a wall of the opening and the insert portion, to yield a hardened composition;
- whereby a first connection between the first object and the hardened composition and a second connection between the hardened composition and the second object results, wherein the first object is anchored in the second object by the first and second connections.

The method may especially comprise causing the energy to impinge while the insert portion is being advanced into the opening or alternatively, as described hereinbefore, only thereafter.

The method may comprise any one or combination of feature of the dependent claims. Especially, the insert portion of the first object may have an outer shape forming an undercut with respect to axial directions, whereby the first connection between the first object and the hardened composition comprises a positive-fit connection. In addition or as an alternative, the hardenable composition is also caused to interpenetrate structures of the second object, whereby the second connection comprises a positive-fit connection between the hardened composition and the second object. In addition or as an alternative to comprising a positive-fit connection, the first and/or the second connection may comprise an adhesive connection. Also, the properties of the first object, the second object, and the hardenable composition, which properties are discussed in the present text, may apply to methods with these alternative energy inputs as well.

### BRIEF DESCRIPTION OF THE DRAWINGS

The invention and embodiments thereof are described in further detail in connection with the appended drawings that are all schematical. Same reference numbers refer to same or analogous elements. In the drawings:
- Fig. 1: shows an arrangement of a first object, a second object, and a hardenable composition;
- Fig. 2: depicts the arrangement of Fig. 1 after the anchoring process;
- Figs. 3 and 4: show proximal portions of alternative first objects;
- Fig. 5: shows an insert portion of a first object pre-assembled with the hardenable composition;
- Fig. 6: shows an arrangement of a first object, a second object, and a hardenable composition in which the hardenable composition partially fills the opening;
- Fig. 7: shows an arrangement with the second object being a hollow brick and the first object being a threaded bar;
- Fig. 8: depicts another arrangement of a first object, a second object, and a hardenable composition in which the hardenable composition partially fills the opening;
- Fig. 9: shows an arrangement of a second object with an auxiliary element and with a dispensing device for dispensing the hardenable composition;
- Fig. 10: shows the arrangement of Fig. 9 at a later stage, with the first object during the anchoring process instead of the dispensing device;
- Figs. 11-13: show elements of an arrangement for carrying out an anchoring process of a first object in a second object during consecutive method steps; and
- Figs. 14-15: show alternative resilient elements.

### DESCRIPTION OF THE PREFERRED EMBODIMENTS

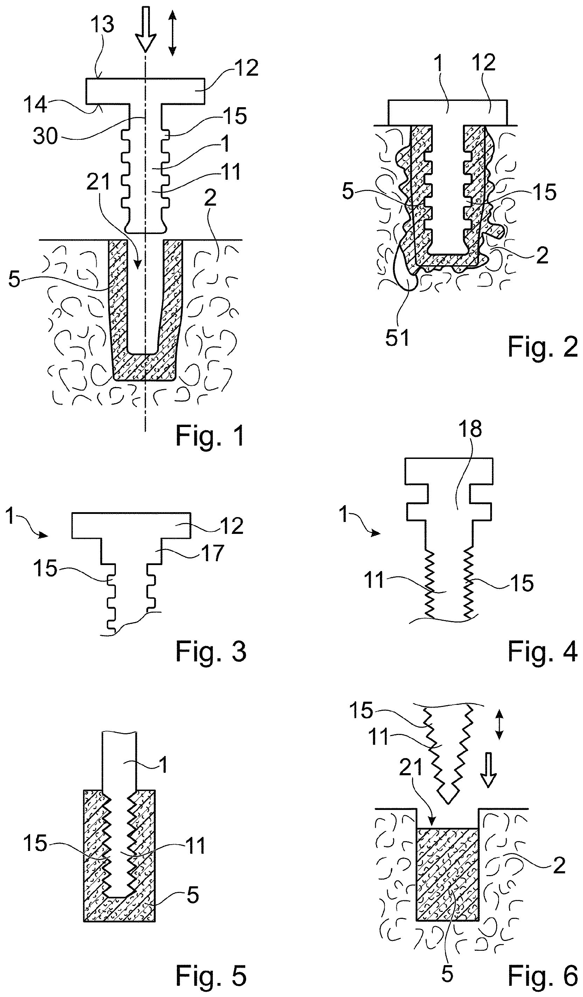

**Figure 1** illustrates a first object 1 and a second object 2. The second object comprises material that is porous or is capable of developing pores under hydrostatic pressure. For example, the second object 2 may be of a porous brick material, a porous composite, an industrial foam etc. It has an opening 21 defining an opening axis 30. The opening may for example be a bore made by drilling or alternatively by any other method, including casting the second object in a shape that comprises the opening 21. If the second object does not entirely consist of the material that is porous or capable of developing pores, this material will be present around at least a part of the opening.

The first object 1 has a pin-like insert portion 11 and a head portion 12. The insert portion 11 has an outer shape that forms an undercut with respect to axial directions (the opening axis 30 is illustrated to coincide with the axis of the insert portion). In the illustrated embodiment, the insert portion is shown to have a plurality of protrusions, for example ribs, 15 for example being ridges extending circumferentially around the axis 30, with indentations between the ridges, whereby the insert portion has the undercut structures.

A sheath of the hardenable composition 5 (for example prepolymer or mortar; in the description of some of the embodiments in this text, it is referred to a prepolymer as an example, the teaching being equally applicable to mortars) is inserted in the opening.

The sheath in Fig. 1 is illustrated to have a closed bottom but this is not a requirement.

Instead of a sheath or other solid element, the hardenable composition may also be provided as a coating of the walls of the opening (covering all walls or just a portion of them) or may be provided as a coating of at least a part of the insert portion or dispensed as liquid or paste into the opening (see below). Then, the consistency of the hardenable composition may optionally be such that it is initially pasty or even liquid and not necessarily dimensionally stable.

For anchoring, the first object 1 is subject to mechanical vibration while the insert portion is pressed into the opening, or, to be precise into the hardenable composition material 5. The inner diameter of the sheath formed by the hardenable composition is undersized relative to the outer diameter of the insert portion 11. The mechanical vibrations may for example be coupled into the first object 1 by sonotrode (not shown in Fig. 1) impinging on a proximally facing coupling face 13 formed by the first object 1 and at the same time moving the first object 1 forward into the opening 21. By this energy input, heat is absorbed in the hardenable composition. Due to this, hardenable composition material initially becomes (more) flowable. By the displacement of the hardenable composition caused upon the first object being inserted when the first object 1 is pressed into the hardenable composition, and/or by other effects, such as capillary forces, the hardenable composition is caused to flow into structures of the second object as well as into the undercut structures of the insert portion 11. Due to the heat absorbed, the hardenable composition will also be subject to an accelerated curing process as a result of which the hardenable composition 5 transforms into a cured polymer. **Figure 2** shows the resulting assembly with the cured polymer 5 penetrating structures of the second object (interpenetrating portions 51) as well as the undercut structures of the first object 1.

In the embodiment of Figs. 1 and 2, the first object is illustrated to have a head portion 12 defining a distally facing abutment face 14. This forms a stop for the forward movement in the anchoring process.

In embodiments like the one of Figures 1 and 2, in which the hardenable composition interpenetrates structures of the second object, especially one or a combination of the following may apply:
- The insert portion 11 of the first object 1 may be over-dimensioned compared to the free space (here: the interior of the sheath defined by the hardenable composition 5) so that the insertion of the first object caused a hydrostatic pressure on and corresponding circulation of the hardenable composition. This is especially the case if the hardenable composition is sufficiently flowable, for example by being pasty/viscous.
- The hardenable composition may be present as a dimensionally stable element that is over-dimensioned relative to the opening so that upon insertion therein it is subject to a press-fit. Partial relaxation induced by the vibration will cause portions of the hardenable composition to penetrate radially-outwardly into the structures of the second object. This option is especially applicable if the hardenable composition prior to the vibration energy input is present as a dimensionally stable element, for example having a Young's Modulus of at least 10 Mpa, for example at least 50 Mpa or at least 100 Mpa - the Modulus can go up to 0.5 Gpa or even higher.
- The insert portion 11 of the first object and/or (if present as dimensionally stable element) the hardenable composition may in addition or as an alternative have structures such as ribs to keep the material localized. For example, the insert portion may have a star-shaped cross-section with the outer ridges for example even penetrating into material of the second object, so as to keep the hardenable composition confined in the spaces between the ridges.
- Further, structures confining the axial flow, especially a backflow out of the opening, such as a plate with a hole for the insert portion, the plate lying against the second object around the mouth of the opening.
- In addition or as an alternative, also elements or ingredients that cause an expansion during the process may be used, such as a foaming agent etc.

**Figure 3** shows an example of a proximal portion of a first object 1 that in addition (or as an alternative) to the head portion 12 has a sealing portion 17. Such a sealing portion may have a diameter approximately corresponding to a diameter of the opening 21, whereby the sealing portion prevents the hardenable composition from flowing back into proximal directions during the anchoring process and supports the interpenetration of the hardenable composition in the first and/or second object.

**Figure 4** illustrates a proximal portion of an even further first object 1, wherein the proximal portion is schematically illustrated to have a coupling structure 18 for coupling the first object to a vibration generating apparatus, whereby the first object is also a sonotrode, i.e., a vibrating tool that directly couples the vibration into the prepolymer. After being de-coupled from the vibration generating apparatus, the first object 1 may serve as connector for connecting a further object to the second object, and the coupling structure 18 may be used for this purpose also.

In **Figure 5****,** the hardenable composition being a prepolymer is shown to be present pre-assembled with the first object 1 in that it is a threaded sleeve threaded onto the first object's insert portion 11. In this, the structures forming an undercut are formed by protrusions 15 forming crests of an outer thread.

For ease of manufacturing, in embodiments it may be advantageous that the undercut structures of the first object 1 form a thread. Depending on material properties, especially adhesion of the cured polymer to the material of the first object, thereby the anchoring of the first object in the second object may be reversible, in that after the curing the prepolymer forms an inner thread into which, and out of which, the first object 1 or an object with an identical thread, may be screwed reversibly.

**Figure 6** yet shows two further optional features which are independent of each other and can be realized individually or in combination:
Firstly, the hardenable composition material 5 is shown to partially fill the opening 21 in an initial state, so that the first object needs to be driven into it by the joint action of the vibration and a pressing force onto the first object. In such a configuration, dispensing is particularly easy and can be done from container containing a bulk of the material. Especially, the hardenable composition may be in a liquid (for example viscous) or pasty state. The introduction of the first object while being vibrated in addition to having the effects of causing the composition to flow into structures and to cause or accelerate the hardening process also causes some circulation in the hardenable composition material before it is hardened. This in addition to contributing to the energy input/heating also has the described effects of supporting a reliable wetting of the second object and the first object by the hardenable composition and of integrating drill dust or similar into the hardenable composition.
Secondly, the first object is illustrated to have an insert portion (with the protrusions 15 for example forming a thread) that tapers towards distally. This eases introduction into the hardenable composition material if the latter is comparably tough and/or hard.

Further possible design features that - in addition or as an alternative to the taper - ease introduction into the hardenable composition material may comprise at least one of: axially running grooves allowing a backflow of the hardenable composition towards proximally; a hollow shape, for example the shape of a hollow cylinder so as to reduce the amount of hardenable composition material to be displaced.

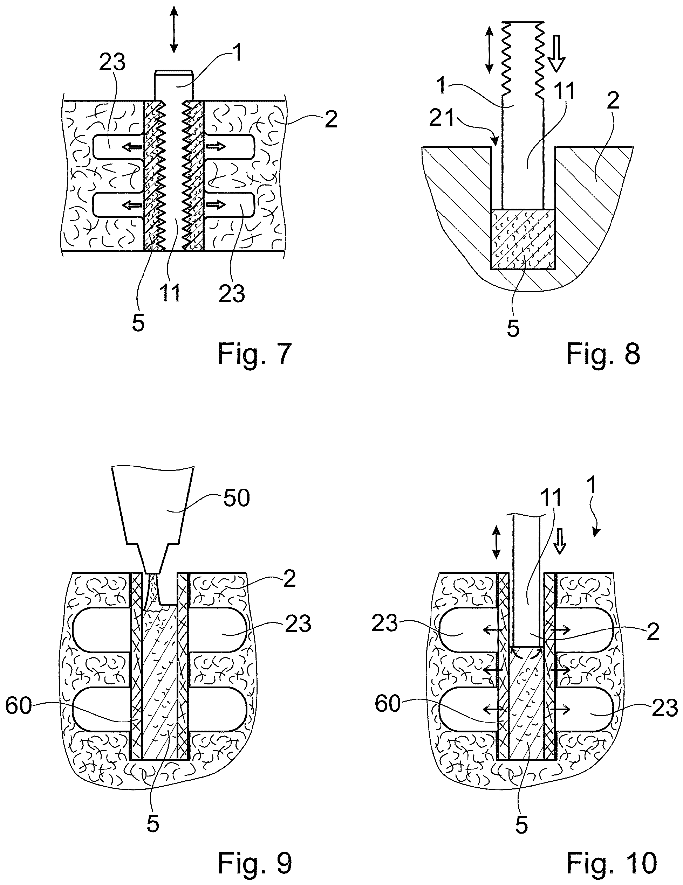

**Figure 7** depicts a configuration in which the second object 2 is a brick with hollow spaces (a so-called 'hollow brick'). In such a second object, in addition to a porosity of the material, there are macroscopic hollow spaces 23. The opening in the embodiment of Fig. 7 is such that at least the shown hollow spaces 23 opens into the opening (the teaching applies if at least one of the hollow spaces opens into the opening). Thereby, when the hardenable composition, here being a prepolymer, becomes more flowable (i.e., its viscosity is lowered) as an effect of the energy input, the prepolymer also flows into the hollow spaces 23. In Fig. 7, this is illustrated by arrows. Thereby, after curing, an additional anchoring effect is achieved by cured material reaching sideways from the opening into the hollow spaces, this yielding a further positive fit with respect to axial directions.

In Fig. 7, the first object 1 is illustrated to be a threaded bar, whereby the after curing, the hardened material serves as a kind of dowel in the second object.

Fig. 7 is also illustrated to be an example of an embodiment in which the opening does not have a bottom but is a through opening. This feature is an option independent of the structure and composition of the second object, i.e., for both, a (hollow) brick and for any other second object, the opening may be a blind opening or a through opening. The element constituted by the hardenable composition may have a for example flange-like lateral protrusion preventing it from moving too far into the opening. Alternatives include use of a stopper plug that can be inserted into the opening prior to inserting the hardenable composition element or use of a meshed sleeve, possibly with a stopper protrusion, that is shaped to contain the hardenable composition, especially if the latter is liquid or pasty (see below).

Also, independently of the nature of the opening, the prepolymer may be provided in a shape that it forms a bottom portion distally of the first object, as shown in Figures 1, 2, 4 and 5, or with no such bottom portion as shown in Fig. 7.

In the embodiments described so far both, the second object and the first object are provided with structures capable of being interpenetrated by the hardenable composition material while the same is in a flowable state to yield, after (re-) solidification, a first/second positive-fit connection with the first/second object, possibly in addition to an adhesive connection. This, however, is not a requirement. Rather, the invention is also useful if the connection between the hardenable composition and the first object and/or the connection between the hardenable composition and the second object is only an adhesive connection, without any interpenetration.

**Figure 8** illustrates an according set-up with neither the first nor the second object having any structures to be interpenetrated by the hardenable composition. Of course, it would also be an option to provide only the first or only the second object with such structures. In the embodiment of Fig. 8, the second object is for example a block of concrete or stone or similar, with an opening drilled therein but without substantial porosity. The first object is a bar having an insert portion 11 with a smooth cylindrical outer surface. A proximal portion of the first object, which after the process will stick out of the opening is illustrated to have an outer thread, for fastening a further element thereto; however, any structure helpful to fulfil a certain function will be applicable.

The hardenable composition 5 is in a liquid or pasty state and is dispensed into the opening by a suitable dispensing device. Then, the first object 1 is inserted while being vibrated, whereby the insert portion is moved into the opening and pressed into the hardenable composition 5, whereby the hardenable composition 5 is locally displaced and set into motion. After a very short time, for example less than a minute, the hardenable composition is hardened and adheres both, to the walls of the opening 21 as well as to the insert portion 11.

For example in embodiments in which the second object comprises macroscopic hollow spaces 23, there is the option of providing an auxiliary element for stabilizing the hardenable composition prior to its hardening if the hardenable composition is initially liquid or pasty. **Figures 9 and 10** illustrate an according embodiment.

Fig. 9 shows a meshed sleeve 60 serving as such auxiliary element inserted into the opening of the second object 2. A dispensing device 50 is used to dispense the hardenable composition, which is in a flowable (liquid or pasty) state into the opening. The meshes of the meshed sleeve are small enough to contain the hardenable composition by way of the high viscosity and/or high surface tension of the latter.

Fig. 10 illustrates the assembly during insertion of the first object while being subject to mechanical vibration. Upon activation by the mechanical vibration, the hardenable composition is caused to flow radially-outward through the meshes both, to get into contact with (and penetrate small structures of) the walls of the opening where no hollow space is present as well as to expand to some extent into the hollow spaces 23. After hardening, three effects contribute to anchoring with respect to the second object 2: adhesion to the walls of the opening; anchoring by (for example microscopic) structures of the wall openings being interpenetrated by hardened material; a rivet effect of hardened material having expanded into the hollow spaces. In the embodiment show in Figs 9 and 10, the first object's insert portion 11 is illustrated to have a smooth cylindrical outer surface, whereby the anchoring of the first object relative to the hardenable composition is mainly due to adhesion. However, the teaching of Figs. 8 and 9 also applies to first object with a structured outer surface.

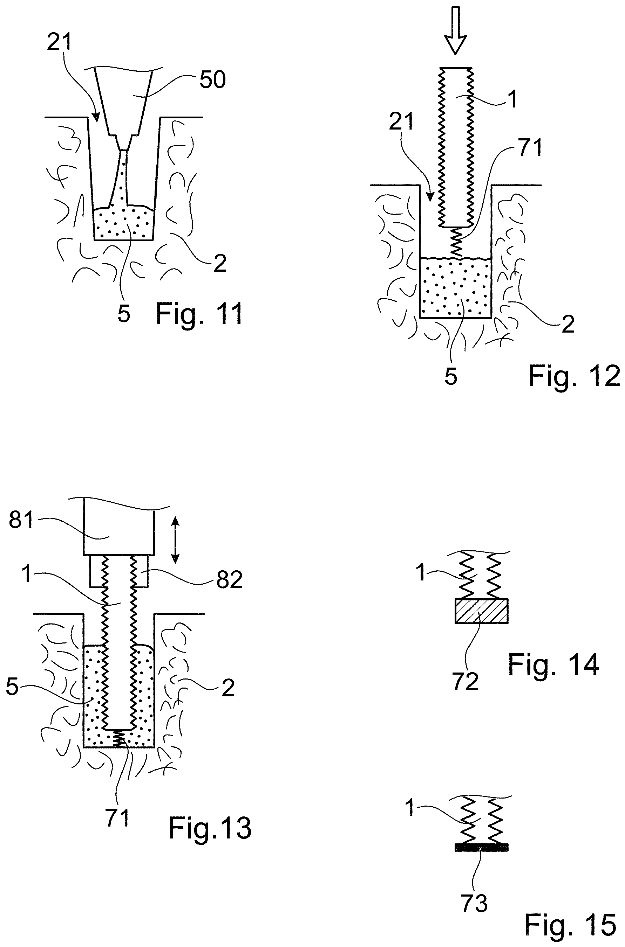

**Figures 11, 12 and 13** show steps of a process of anchoring a first object. Compared to previously described embodiments, there are the following differences:
- The hardenable composition 5 is disposed into the pre-made opening 21 in a flowable state, as a viscous liquid (Fig. 11).
- Before the insert portion of the first object 1 is introduced, or simultaneously therewith, an resilient element is positioned so that during the step of coupling the vibration energy into the first object it lies between the distal end of the first object 1 and the bottom of the opening. In the depicted embodiment, the resilient element is a metallic spring 71. The teaching of Figs. 11-13 also applies to other spring elements. In the embodiment of Figs. 11-13, moreover, the elastic element is mounted to the distal end of the first object of introduction. Alternatively, it could be introduced into the opening 21 independently of the first object, before or after dispensing the hardenable composition.
   Due to the elastic element, the first object 1 can vibrate essentially freely when the vibration energy is coupled into it (Fig. 13), even if it is held against the bottom of the opening.
- The first object 1 is not vibrated during insertion into the opening (Fig. 12).
- The first object 1 is releasably mechanically coupled (mounted) to the sonotrode 81 that is used for coupling the vibration energy into the first object during (Fig. 13) after its insertion into the opening. To this end, a coupling piece 82 is fastened to the sonotrode 81. In the depicted embodiment, the coupling piece 82 is a nut that cooperates with a thread of the first object 1. Other coupling pieces or the integration of the coupling function into the sonotrode itself (for example by providing the sonotrode with a coupling structures, such as an inner or outer thread or other mechanical coupling, adapted to the structure of the first object) would be options, too. The mounting of the first object to the sonotrode serves for coupling the full amplitude of the mechanical vibration into the first object, in contrast to solutions in which the sonotrode merely hammers onto the first object 1.
- The first object 1 is a threaded bar without any head or similar.

While the depicted embodiment shows these differences in combination, they would be implementable individually or in sub-combinations, even though these features act in a synergistic manner. This is especially true for the dispensing in a flowable state and the mechanical coupling between the first object and the sonotrode, as well as for the elastic element together the coupling of vibration energy into the first object after its introduction.

**Figures 14 and 15** yet show a disc 72 of an elastomeric material, and a sheet 73 of thick cardboard as alternative resilient elements attached to the distal end of a first object 1.

As in any embodiment, also in the embodiments of Figs. 11-15, the hardenable composition 5 may comprise a filler, for example to enhance the thermal conductivity (such as of a thermally conductive ceramics) and/or of a material with a high internal friction for high absorption of mechanical energy.

The invention is not restricted to these embodiments. Other variants will be obvious for the person skilled in the art and are considered to lie within the scope of the invention as formulated in the following claims. Individual features described in all parts of the above specification, particularly with respect to the figures may be combined with each other to form other embodiments and/or applied mutatis mutandis to what is described in the claims and to the rest of the description, even if the features are described in respect to or in combination with other features, the invention being limited solely by the wording of the appended claims.

## Claims

1. A method of anchoring a first object (1) in a second object (2), the method comprising the steps of:
• providing the second object (2), wherein the second object comprises an opening (21);
• Providing the first object (1) having an insert portion (11) that defines an insertion axis;
• Inserting a hardenable composition (5) and the insert portion (11) in the opening;
• causing mechanical vibration energy to impinge on the first object to cause the hardenable composition (5) to undergo a chemical hardening process while it is between a wall of the opening (21) and the insert portion (11), to yield a hardened composition;
• whereby a first connection between the first object (1) and the hardened composition and a second connection between the hardened composition and the second object (2) results, wherein the first object (1) is anchored in the second object (2) by the first and second connections.

2. The method according to claim 1, wherein the vibration energy impinges while the insert portion (11) is being advanced into the opening (21), and wherein the hardenable composition (5) is optionally at least partially displaced by the insert portion (11) being advanced into the opening (21).

3. The method according to claim 1, wherein the steps of inserting the hardenable composition (5) and the insert portion (11) into the opening (21) and of causing the mechanical vibration energy to impinge are carried out sequentially, wherein the vibration energy impinges only after the insert portion (11) has been inserted.

4. The method according to any one of the previous claims, wherein the step of inserting the hardenable composition (5) and the insert portion (11) comprises the sub-steps of inserting the hardenable composition (5) and of inserting the insert portion (11) only after the sub-step of inserting the hardenable composition (5).

5. The method according to any one of the previous claims, wherein in the step of causing mechanical vibration energy to impinge on the first object (1), the first object (1) is mounted to a vibrating sonotrode (81), or wherein the first object (1) is a sonotrode.

6. The method according to any one of the previous claims, further comprising causing a resilient element (71) to be placed between a distal end of the insert portion (11) and a bottom of the opening (21) during the step of causing mechanical vibration energy to impinge on the first object.

7. The method according to any one of the previous claims, wherein the insert portion (11) of the first object (1) has an outer shape forming an undercut with respect to axial directions, for example by the outer shape having a thread, whereby the first connection between the first object (1) and the hardened composition (5) comprises a positive-fit connection,
and/or wherein the mechanical vibration energy also causes the hardenable composition (5) to interpenetrate structures of the second object (2), whereby the second connection comprises a positive-fit connection between the hardened composition and the second object (2).

8. The method according to any one of the previous claims, wherein the first connection and/or the second connection comprises an adhesive connection.

9. The method according to any one of the previous claims, wherein the hardenable composition (5) comprises a polymer and/or polymerizable material, for example a prepolymer and/or a monomer, and wherein the hardenable composition optionally further comprises a filler having a higher heat conductivity than the polymer and/or polymerizable material.

10. The method according to claim 9, wherein the polymer and/or polymerizable material is hardenable by a chemical reaction such as curing, especially cross-linking.

11. The method according to any one of the previous claims, wherein the hardenable composition (5) comprises a mortar.

12. The method according to any one of the previous claims, wherein the hardenable composition (5) is liquid or pasty and is inserted into the opening (21) by being dispensed into the opening or onto the insert portion from a dispensing device (50), or wherein the hardenable composition (5) is in a solid state and is provided as a hardenable composition element.

13. The method according to any one of the previous claims, wherein the step of causing mechanical vibration energy to impinge in a first stage causes a viscosity of the hardenable composition (5) to be decrease compared to an initial viscosity and in a second stage causes the viscosity of the hardenable composition (5) to be raised by the hardening process above the initial viscosity to yield the hardened composition, wherein the hardenable composition for example has a temperature dependent viscosity, with the viscosity decreasing with increasing temperature.

14. The method according to any one of the previous claims, wherein the second object (2) is porous, and/or wherein the second object (2) has at least one macroscopic hollow space (23) that opens into the opening (21).

15. The method according to any one of the previous claims, wherein providing the first object (1) comprises providing the first object pre-assembled with the hardenable composition (5) at least partially surrounding the insert portion (11), and/or wherein providing the second object (2) comprises providing the second object pre-assembled with the hardenable composition (5) at least partially lining an opening wall of the opening (21) and/or at least partially filling the opening (21).

## Patentansprüche

1. Verfahren zum Verankern eines ersten Objekts (1) in einem zweiten Objekt (2), wobei das Verfahren die folgenden Schritte umfasst:
• Bereitstellen des zweiten Objekts (2), wobei das zweite Objekt eine Öffnung (21) aufweist;
• Bereitstellen des ersten Objekts (1) mit einem Einführungsabschnitt (11), der eine Einführungsachse definiert;
• Einführen einer aushärtbaren Zusammensetzung (5) und des Einführungsabschnitts (11) in die Öffnung;
• Einwirken lassen von mechanischer Schwingungsenergie auf das erste Objekt, um zu bewirken, dass die aushärtbare Zusammensetzung (5) einen chemischen Aushärtungsprozess durchläuft, während sie sich zwischen einer Wand der Öffnung (21) und dem Einführungsabschnitt (11) befindet, um eine ausgehärtete Zusammensetzung zu erhalten;
• wodurch eine erste Verbindung zwischen dem ersten Objekt (1) und der ausgehärteten Zusammensetzung und eine zweite Verbindung zwischen der ausgehärteten Zusammensetzung und dem zweiten Objekt (2) entsteht, wobei das erste Objekt (1) durch die erste und zweite Verbindung im zweiten Objekt (2) verankert ist.

2. Verfahren nach Anspruch 1, wobei die Schwingungsenergie einwirkt, während der Einführungsabschnitt (11) in die Öffnung (21) vorgeschoben wird, und wobei die aushärtbare Zusammensetzung (5) optional zumindest teilweise durch den in die Öffnung (21)vorgetriebenen Einführungsabschnitt (11) verdrängt wird.

3. Verfahren nach Anspruch 1, wobei die Schritte des Einführens der aushärtbaren Zusammensetzung (5) und des Einführungsabschnitts (11) in die Öffnung (21) und des Einwirkenlassens der mechanischen Schwingungsenergie nacheinander durchgeführt werden, wobei die Schwingungsenergie erst nach dem Einführen des Einführungsabschnitts (11) einwirkt.

4. Verfahren nach einem der vorstehenden Ansprüche, wobei der Schritt des Einführens der aushärtbaren Zusammensetzung (5) und des Einführungsabschnitts (11) die Teilschritte des Einführens der aushärtbaren Zusammensetzung (5) und des Einführens des Einführungsabschnitts (11) erst nach dem Teilschritt des Einführens der aushärtbaren Zusammensetzung (5) umfasst.

5. Verfahren nach einem der vorstehenden Ansprüche, wobei in dem Schritt des Einwirkenlassens mechanischer Schwingungsenergie auf das erste Objekt (1) das erste Objekt (1) an einer vibrierenden Sonotrode (81) angebracht ist oder wobei das erste Objekt (1) eine Sonotrode ist.

6. Verfahren nach einem der vorstehenden Ansprüche, wobei ferner vorgesehen ist, dass während des Schritts des Einwirkenlassens mechanischer Schwingungsenergie auf das erste Objekt ein elastisches Element (71) zwischen einem distalen Ende des Einführungsabschnitts (11) und einem Boden der Öffnung (21) angeordnet wird.

7. Verfahren nach einem der vorhergehenden Ansprüche, wobei der Einführungsabschnitt (11) des ersten Objekts (1) eine Aussenform aufweist, die in Bezug auf axiale Richtungen eine Hinterschneidung bildet, beispielsweise dadurch, dass die Aussenform ein Gewinde aufweist, wodurch die erste Verbindung zwischen dem ersten Objekt (1) und der ausgehärteten Zusammensetzung (5) eine Formschlussverbindung umfasst,
und/oder wobei die mechanische Schwingungsenergie auch bewirkt, dass die aushärtbare Zusammensetzung (5) Strukturen des zweiten Objekts (2) durchdringt, wodurch die zweite Verbindung eine Formschlussverbindung zwischen der gehärteten Zusammensetzung und dem zweiten Objekt (2) umfasst.

8. Verfahren nach einem der vorhergehenden Ansprüche, wobei die erste Verbindung und/oder die zweite Verbindung eine Klebeverbindung umfasst.

9. Verfahren nach einem der vorstehenden Ansprüche, wobei die aushärtbare Zusammensetzung (5) ein Polymer und/oder polymerisierbares Material, beispielsweise ein Prepolymer und/oder ein Monomer, umfasst und wobei die aushärtbare Zusammensetzung optional zusätzlich einen Füllstoff mit einer höheren Wärmeleitfähigkeit als das Polymer und/oder polymerisierbare Material umfasst.

10. Verfahren nach Anspruch 9, wobei das Polymer und/oder polymerisierbare Material durch eine chemische Reaktion wie Aushärten, insbesondere Vernetzen, aushärtbar ist.

11. Verfahren nach einem der vorstehenden Ansprüche, wobei die aushärtbare Zusammensetzung (5) einen Mörtel umfasst.

12. Verfahren nach einem der vorstehenden Ansprüche, wobei die aushärtbare Zusammensetzung (5) flüssig oder pastös ist und in die Öffnung (21) eingebracht wird, indem sie aus einer Abgabevorrichtung (50) in die Öffnung oder auf den Einführungsabschnitt abgegeben wird, oder wobei die aushärtbare Zusammensetzung (5) in einem festen Zustand vorliegt und als härtbares Zusammensetzungselement bereitgestellt wird.

13. Verfahren nach einem der vorstehenden Ansprüche, wobei der Schritt des Einwirkenlassens mechanischer Schwingungsenergie in einer ersten Stufe bewirkt, dass die Viskosität der aushärtbaren Zusammensetzung (5) im Vergleich zu einer Anfangsviskosität abnimmt, und in einer zweiten Stufe bewirkt, dass die Viskosität der aushärtbaren Zusammensetzung (5) durch den Härtungsprozess über die Anfangsviskosität erhöht wird, um die ausgehärtete Zusammensetzung zu erhalten, wobei die aushärtbare Zusammensetzung beispielsweise eine temperaturabhängige Viskosität aufweist, wobei die Viskosität mit steigender Temperatur abnimmt.

14. Verfahren nach einem der vorstehenden Ansprüche, wobei das zweite Objekt (2) porös ist und/oder wobei das zweite Objekt (2) mindestens einen makroskopischen Hohlraum (23) aufweist, der sich in die Öffnung (21) öffnet.

15. Verfahren nach einem der vorstehenden Ansprüche, wobei das Bereitstellen des ersten Objekts (1) in einem mit der aushärtbaren Zusammensetzung (5) vor-assemblierten Zustand umfasst, in welchem die aushärtbare Zusammensetzung (5) den Einführungsabschnitt (11) mindestens teilweise umgibt und/oder wobei das Bereitstellen des zweiten Objekts (2) in einem mit der aushärtbaren Zusammensetzung (5) vor-assemblierten Zustand umfasst, in welchem die aushärtbare Zusammensetzung (5) eine Öffnungswand der Öffnung (21) mindestens teilweise auskleidet und/oder zumindest teilweise die Öffnung (21) ausfüllt.

## Revendications

1. Procédé d'ancrage d'un premier objet (1) dans un deuxième objet (2), le procédé comprenant les étapes suivantes :
• fournir le deuxième objet (2), dans lequel le deuxième objet comprend une ouverture (21) ;
• fournir le premier objet (1) ayant une partie d'insertion (11) qui définit un axe d'insertion ;
• Insérer une composition durcissable (5) et la partie d'insertion (11) dans l'ouverture ;
• Provoquer une énergie de vibration mécanique sur le premier objet afin de faire subir à la composition durcissable (5) un processus de durcissement chimique alors qu'elle se trouve entre une paroi de l'ouverture (21) et la partie d'insertion (11), afin d'obtenir une composition durcie ;
• ce qui donne lieu à une première connexion entre le premier objet (1) et la composition durcie et à une deuxième connexion entre la composition durcie et le deuxième objet (2), dans lequel le premier objet (1) est ancré dans le deuxième objet (2) par les première et deuxième connexions.

2. Procédé selon la revendication 1, dans lequel l'énergie vibratoire est appliquée pendant que la partie d'insertion (11) est avancée dans l'ouverture (21), et dans lequel la composition durcissable (5) est éventuellement au moins partiellement déplacée par la partie d'insertion (11) avancée dans l'ouverture (21).

3. Procédé selon la revendication 1, dans lequel les étapes consistant à insérer la composition durcissable (5) et la partie d'insertion (11) dans l'ouverture (21) et à provoquer l'impact de l'énergie vibratoire mécanique sont effectuées séquentiellement, l'énergie vibratoire n'impactant qu'après l'insertion de la partie d'insertion (11).

4. Procédé selon l'une quelconque des revendications précédentes, dans lequel l'étape consistant à insérer la composition durcissable (5) et la partie d'insertion (11) comprend les sous-étapes consistant à insérer la composition durcissable (5) et à insérer la partie d'insertion (11) uniquement après la sous-étape consistant à insérer la composition durcissable (5).

5. Procédé selon l'une quelconque des revendications précédentes, dans lequel, lors de l'étape consistant à faire agir l'énergie de vibration mécanique sur le premier objet (1), le premier objet (1) est monté sur une sonotrode vibrante (81), ou dans lequel le premier objet (1) est une sonotrode.

6. Procédé selon l'une quelconque des revendications précédentes, comprenant en outre le fait de placer un élément élastique (71) entre une extrémité distale de la partie d'insertion (11) et un fond de l'ouverture (21) pendant l'étape consistant à faire agir une énergie de vibration mécanique sur le premier objet.

7. Procédé selon l'une quelconque des revendications précédentes, dans lequel la partie d'insertion (11) du premier objet (1) a une forme extérieure formant une contre-dépouille par rapport aux directions axiales, par exemple en ayant une forme extérieure filetée, de sorte que la première connexion entre le premier objet (1) et la composition durcie (5) comprend une une liaison en correspondance géométrique,
et/ou dans lequel l'énergie vibratoire mécanique provoque également l'interpénétration de la composition durcissable (5) dans les structures du deuxième objet (2), de sorte que la deuxième connexion comprend une liaison en correspondance géométrique entre la composition durcie et le deuxième objet (2).

8. Procédé selon l'une quelconque des revendications précédentes, dans lequel la première connexion et/ou la deuxième connexion comprend une connexion adhésive.

9. Procédé selon l'une quelconque des revendications précédentes, dans lequel la composition durcissable (5) comprend un polymère et/ou un matériau polymérisable, par exemple un prépolymère et/ou un monomère, et dans lequel la composition durcissable comprend en outre, de manière facultative, une charge ayant une conductivité thermique supérieure à celle du polymère et/ou du matériau polymérisable.

10. Procédé selon la revendication 9, dans lequel le polymère et/ou le matériau polymérisable est durcissable par une réaction chimique telle que le durcissement, en particulier la réticulation.

11. Procédé selon l'une quelconque des revendications précédentes, dans lequel la composition durcissable (5) comprend un mortier.

12. Procédé selon l'une quelconque des revendications précédentes, dans lequel la composition durcissable (5) est liquide ou pâteuse et est insérée dans l'ouverture (21) en étant distribuée dans l'ouverture ou sur la partie d'insertion à partir d'un dispositif de distribution (50), ou dans lequel la composition durcissable (5) est à l'état solide et est fournie sous forme d'élément de composition durcissable.

13. Procédé selon l'une quelconque des revendications précédentes, dans lequel l'étape consistant à faire intervenir une énergie de vibration mécanique dans une première étape provoque une diminution de la viscosité de la composition durcissable (5) par rapport à une viscosité initiale et, dans une deuxième étape, provoque une augmentation de la viscosité de la composition durcissable (5) par le processus de durcissement au-dessus de la viscosité initiale pour obtenir la composition durcie, dans lequel la composition durcissable a par exemple une viscosité dépendante de la température, la viscosité diminuant avec l'augmentation de la température.

14. Procédé selon l'une quelconque des revendications précédentes, dans lequel le deuxième objet (2) est poreux et/ou dans lequel le deuxième objet (2) comporte au moins un espace creux macroscopique (23) qui s'ouvre dans l'ouverture (21).

15. Procédé selon l'une quelconque des revendications précédentes, dans lequel la fourniture du premier objet (1) comprend la fourniture du premier objet préassemblé avec la composition durcissable (5) entourant au moins partiellement la partie d'insertion (11), et/ou dans lequel la fourniture du deuxième objet (2) comprend la fourniture du deuxième objet préassemblé avec la composition durcissable (5) au moins partiellement revêtant une paroi d'ouverture de l'ouverture (21) et/ou au moins partiellement remplissant l'ouverture (21).
